# EUROPÄISCHE PATENTANMELDUNG

(11) **EP 2 237 123 A1**
(43) Veröffentlichungstag der Anmeldung: **06.10.2010**
(21) Anmeldenummer: 09004523.8
(22) Anmeldetag: 30.03.2009
(51) Int. Cl.: G05B 19/418, G05B 19/042, G06F 9/44

(54) **Verfahren, Vorrichtung und Computerprogramm zur dezentralen Kompatibilitätsprüfung zwischen Komponenten in einem Automatisierungssystem**

(71) Anmelder: Siemens Aktiengesellschaft, 80333 München (DE)
(72) Erfinder: Dittes, Walter, 75053 Gondelsheim (DE); Montbrun, Vera, 76187 Karlsruhe (DE)

(57) **Zusammenfassung**

Zum Betrieb einer Steuerungs-, Meß- und/oder Überwachungseinrichtung werden in einer Speichereinheit eines Grundmoduls (100) für mit dem Grundmodul verbundene erste Module (110,130) zumindest jeweils ein Modulidentifikator und eine Angabe über eine Firmwareversion gespeichert. Ein zweites Modul (120) übermittelt bei Verbindung mit dem Grundmodul eine erste Meldung an das Grundmodul, die einen Modulidentifikator und eine Angabe über eine Firmwareversion des zweiten Moduls umfaßt. Der Modulidentifikator und die Angabe der Firmwareversion des zweiten Moduls werden in der Speichereinheit (101) gespeichert. Das Grundmodul übermittelt eine zweite Meldung an mit dem Grundmodul verbundene Module, die in der Speichereinheit gespeicherte Modulidentifikatoren und zugeordnete Angaben über Firmwareversionen umfaßt. Mit dem Grundmodul verbundene Module führen anhand der zweiten Meldung jeweils eigenständig eine Prüfung einer Kompatibilität ihrer eigenen Firmwareversion mit der Firmwareversion anderer Module durch. Bei einer erkannten Inkompatibilität übermittelt ein Modul eine Statusmeldung an das Grundmodul.

## Beschreibung

In modular aufgebauten Steuerungs-, Meß- oder Analysegeräten für industrielle Automatisierungssysteme werden Module u.a. zu Wartungs- oder Reparaturzwecken durch Ersatzmodule ausgetauscht, oder es werden neue Module zusätzlich zu bereits vorhandenen ergänzt. Dabei ist sicherzustellen, daß Ersatz- oder Ergänzungsmodule kompatibel zu vorhandenen Modulen sind und ihre Parameter korrekt initialisiert werden. Bei konventionellen Steuerungs-, Meß- oder Analysegeräten werden Parametrierungsdaten für angeschlossene Module zur Sicherung üblicherweise manuell auf ein externes Gerät wie einen PC übertragen und dort gespeichert. In Fehlerfällen ist dabei problematisch, daß entweder keine Sicherung von Parametrierungsdaten vorliegt oder diese veraltet sein kann. Infolge dessen kann für ein Ersatzmodul eine aufwendige Neuparametrierung und Initialisierung erforderlich werden. In industriellen Automatisierungssystemen ist dies besonders problematisch, wenn hierdurch kostspielige Anlagenstillstandszeiten beispielsweise in einem Fertigungsautomatisierungsprozeß verursacht werden.

Aus EP 0 498 130 A2 ist ein Verfahren zur Kompatibilitätsprüfung von Systemkomponenten bekannt, bei dem jeder Systemkomponente eine Versionsinformation zugeordnet ist. Die Versionsinformationen sind für andere Systemkomponenten zugänglich abgespeichert. Zur Kompatibilitätsprüfung liest jede Systemkomponente Versionsinformationen zu anderen Systemkomponenten aus, mit denen sie interagieren muß, und vergleicht die Versionsinformationen mit einem Referenzwert. Auf diese Weise kann ermittelt werden, ob Kompatibilitätsanforderungen erfüllt sind. Entdeckt eine Systemkomponente eine Inkompatibilität mit einer anderen Systemkomponente, signalisiert sie einen Systemfehler.

Der vorliegenden Erfindung liegt die Aufgabe zugrunde, ein effizientes Verfahren zum zuverlässigen Betrieb einer modularen Steuerungs-, Meß- und/oder Überwachungseinrichtung zu schaffen und geeignete Mittel zur Durchführung des Verfahrens anzugeben.

Diese Aufgabe wird erfindungsgemäß durch ein Verfahren mit den in Anspruch 1 angegebenen Merkmalen, eine Steuerungs-, Meß- und/oder Überwachungseinrichtung mit den in Anspruch 11 angegebenen Merkmalen, ein Steuerungs-, Meß- und/oder Überwachungsmodul mit den in Anspruch 12 angegebenen Merkmalen und ein Steuerungsprogramm mit den in Anspruch 13 angegebenen Merkmalen gelöst. Vorteilhafte Weiterbildungen der vorliegenden Erfindung sind in den abhängigen Ansprüchen angegeben.

Entsprechend dem erfindungsgemäßen Verfahren sind in einer Speichereinheit, die einem Grundmodul einer Steuerungs-, Meß- und/oder Überwachungseinrichtung zugeordnet ist, für mit dem Grundmodul verbundene erste Module zumindest jeweils ein Modulidentifikator und eine Angabe über eine Firmwareversion eines ersten Moduls gespeichert. Die Steuerungs-, Meß- und/oder Überwachungseinrichtung kann beispielsweise einem industriellen Automatisierungssystem zur Fertigungs-, Prozeß- oder Gebäudeautomatisierung zugeordnet sein. Ein zweites Modul übermittelt bei Verbindung mit dem Grundmodul eine erste Meldung an das Grundmodul, die einen Modulidentifikator und eine Angabe über eine Firmwareversion des zweiten Moduls umfaßt. Der übermittelte Modulidentifikator und die Angabe der Firmwareversion des zweiten Moduls werden automatisch in der Speichereinheit gespeichert. Das Grundmodul übermittelt eine zweite Meldung an mit dem Grundmodul verbundene Module, die in der Speichereinheit gespeicherte Modulidentifikatoren und zugeordnete Angaben über Firmwareversionen umfaßt. Anhand der zweiten Meldung führen mit dem Grundmodul verbundene Module jeweils eigenständig eine Prüfung einer Kompatibilität ihrer eigenen Firmwareversion mit der Firmwareversion anderer mit dem Grundmodul verbundener Module durch. Bei einer erkannten Inkompatibilität übermittelt ein Modul eine Statusmeldung an das Grundmodul, die zumindest den Modulidentifikator eines aufgrund der Firmwareversion inkompatiblen Moduls und eine Angabe eines für das inkompatible Modul erforderlichen Versionsstandes zur Inkompatibilitätsbeseitigung umfaßt. Auf diese Weise kann durch das Grundmodul eine automatisierte Inkompatibilitätsbeseitigung veranlaßt werden.

Vorzugsweise stellt das Grundmodul bei einer erkannten Inkompatibilität an einer Benutzerschnittstelle eine Auswahl an Konfliktbereinigungsoptionen bereit. Auf eine Benutzerauswahl veranlaßt das Grundmodul ein Laden zueinander kompatibler Firmware durch von der erkannten Inkompatibilität betroffene Module entsprechend einer ausgewählten Konfliktbereinigungsoption. Auf diese Weise lassen sich Risiken einer Fehlkonfigurierung bei einem Konfliktbereinigungsversuch minimieren. Entsprechend einer weiteren vorteilhaften Ausgestaltung der vorliegenden Erfindung veranlaßt das Grundmodul bei einer bestehenden Inkompatibilität eine Verhinderung eines Systemstarts der Steuerungs-, Meß- und/oder Überwachungseinrichtung.

Entsprechend einer besonders bevorzugten Weiterbildung der vorliegenden Erfindung werden Konfigurationsparameter von mit dem Grundmodul verbundenen Modulen in der Speichereinheit gespeichert und laufend aktualisiert. Auf diese Weise kann sichergestellt werden, daß im Fall eines Modulfehlers und Austauschs durch ein Ersatzmodul keine Konfigurationsparameter verloren gehen, wodurch etwaige Ausfallzeiten reduziert werden. Bei einem Austausch eines mit dem Grundmodul verbundenen Moduls durch ein Ersatzmodul erfolgt vorzugsweise eine automatische Übertragung von Konfigurationsparametern des Moduls auf das Ersatzmodul. Entsprechend einer weiteren Ausgestaltung der vorliegenden Erfindung erfolgt die Übertragung der Konfigurationsparameter auf das Ersatzmodul erst nach Benutzerfreigabe. Hierdurch wird Bedienpersonal die Möglichkeit eröffnet, eine Übernahme von Konfigurationsparametern bedarfsgerecht zu steuern.

Die Erfindung wird nachfolgend an einem Ausführungsbeispiel anhand der Zeichnung näher erläutert. Es zeigt
- Figur 1: eine Strukturdarstellung einer modularen Steuerungs-, Meß- und Überwachungseinrichtung,
- Figur 2: ein Ablaufdiagramm für ein Verfahren zum Betrieb einer Steuerungs-, Meß- und Überwachungseinrichtung.

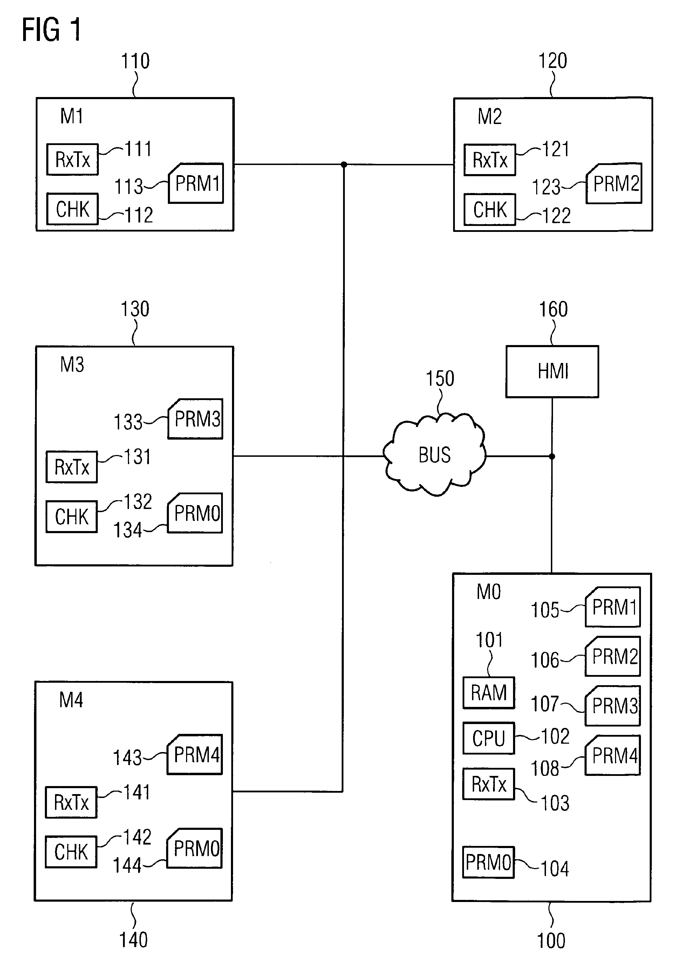

Die in Figur 1 dargestellte modulare Steuerungs-, Meß- und Überwachungseinrichtung umfaßt ein Grundmodul 100 und mehrere im Grundmodul 100 angeordnete Module 110, 120, 130, 140 für Steuerungs-, Meß- und/oder Überwachungsfunktionen, die mit dem Grundmodul 100 über ein Bus-System 150 verbunden sind. Bei der Steuerungs-, Meß- und Überwachungseinrichtung kann es sich beispielsweise um ein Gasanalysegerät handeln. Die nachfolgenden Ausführungen sind jedoch allgemeingültig für beliebige modulare Steuerungs-, Meß- und/oder Überwachungseinrichtungen, die in einem industriellen Automatisierungssystem verwendbar sind.

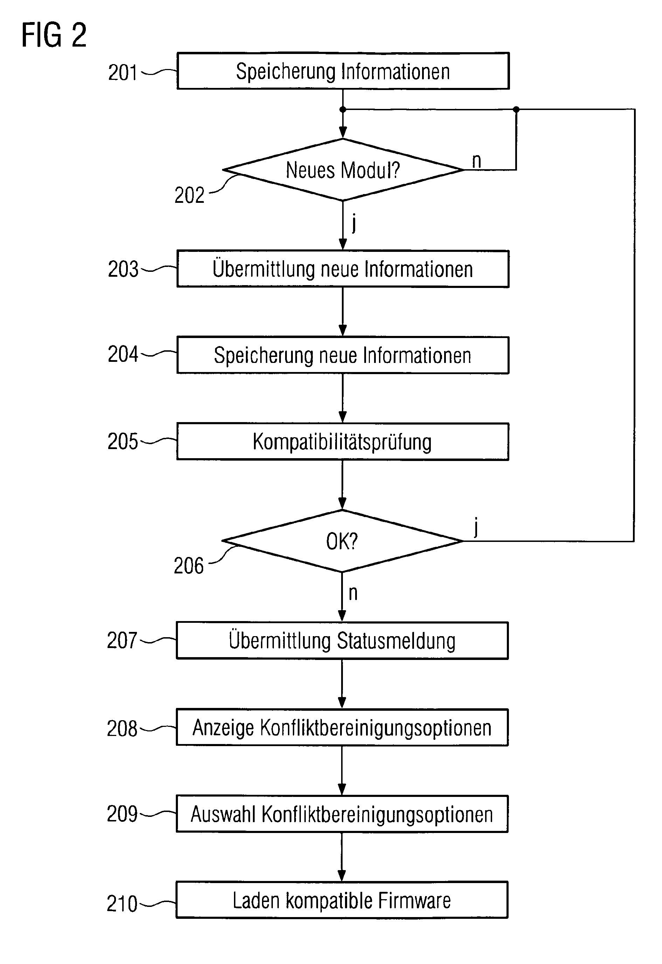

Entsprechend dem in Figur 2 dargestellten Ablaufdiagramm werden zunächst in einer dem Grundmodul 100 zugeordneten Speichereinheit für mit dem Grundmodul 100 verbundene Module 110, 120, 130, 140 Informationen 105-108 abgespeichert (Schritt 201), die für jedes Modul einen Modulidentifikator, eine Angabe über eine Firmwareversion des Moduls und eine Kopie von Konfigurationsparametern umfassen. Die im Grundmodul 100 gespeicherten Konfigurationsparameter von mit dem Grundmodul 100 verbundenen Modulen werden laufend aktualisiert. Originale der Konfigurationsparameter 113, 123, 133, 143 sind darüber hinaus in Speichereinheiten der jeweiligen Module 110, 120, 130, 140 gespeichert.

Bei einem Austausch eines mit dem Grundmodul 100 verbundenen Moduls durch ein Ersatzmodul erfolgt eine automatische Übertragung von Konfigurationsparametern des Moduls auf das Ersatzmodul, vorzugsweise erst nach Benutzerfreigabe. Zur Benutzerfreigabe wird eine Meldung an einer mit dem Grundmodul 100 verbundenen Benutzerschnittstelle 160 signalisiert, so daß eine Konfigurationsänderung bestätigt oder ein Systemneuanlauf mit erneuter Modulerkennung veranlaßt werden kann. Eine durch eine Benutzerfreigabe zu bestätigende Übertragung von Konfigurationsparametern bietet als Vorteil, daß neben einer automatischen Übertragung auch eine Beibehaltung von bestehenden Konfigurationsparametern auf dem Ersatzmodul möglich ist.

In ausgewählten Modulen 130, 140 sind zusätzlich zu eigenen Konfigurationsparametern auch Kopien von Konfigurationsparametern 134, 144 des Grundmoduls gespeichert. Die Originale der Konfigurationsparameter 104 des Grundmoduls sind im Grundgrundmodul 100 selbst gespeichert. Bei einem Austausch des Grundmoduls können die Konfigurationsparameter des Grundmoduls durch Rückgriff auf die in den ausgewählten Modulen 130, 140 gespeicherten Kopien wiederhergestellt werden.

Darüber hinaus wird fortlaufend überprüft, ob ein neues Modul mit dem Grundmodul 100 verbunden wird (Schritt 202). Wird ein neues Modul mit dem Grundmodul 100 verbunden, übermittelt das neue Modul eine Registrierungsmeldung an das Grundmodul, die einen Modulidentifikator und eine Angabe über eine Firmwareversion des neuen Moduls umfaßt (Schritt 203). Anschließend werden der übermittelte Modulidentifikator und die Angabe der Firmwareversion des neuen Moduls im Grundmodul 100 gespeichert (Schritt 204). Das Grundmodul 100 übermittelt außerdem eine Sammelmeldung an die mit dem Grundmodul 100 verbundene Module 110, 120, 130, 140, die im Grundmodul 100 gespeicherte Modulidentifikatoren und zugeordnete Angaben über Firmwareversionen umfaßt. Anhand dieser Meldung führen die mit dem Grundmodul 100 verbundenen Module 110, 120, 130, 140 jeweils eigenständig eine Prüfung einer Kompatibilität ihrer eigenen Firmwareversion mit der Firmwareversion anderer mit dem Grundmodul 100 verbundener Module durch (Schritt 205). Anschließend erfolgt innerhalb des anhand von Figur 2 veranschaulichten Verfahrens entsprechend Schritt 206 eine Verzweigung in Abhängigkeit von einer erkannten Inkompatibilität. Bestehen keine Inkompatibilitäten, wird eine positive Quittierungsmeldung an das Grundmodul 100 übermittelt und entsprechend Schritt 202 erneut geprüft, ob ein neues Modul mit dem Grundmodul 100 verbunden wird.

Bei einer durch eines der Module erkannten Inkompatibilität übermittelt das jeweilige Modul eine Statusmeldung an das Grundmodul 100 (Schritt 207). Die Statusmeldung umfaßt den Modulidentifikator eines aufgrund der Firmwareversion inkompatiblen Moduls und eine Angabe eines für das inkompatible Modul erforderlichen Versionsstandes zur Inkompatibilitätsbeseitigung.

Die Module 110, 120, 130, 140 umfassen jeweils eine Sende- und Empfangseinheit 111, 121, 131, 141 zur Übermittlung von Registrierungsmeldungen und Statusmeldungen an das Grundmodul 100. Außerdem ist jeweils eine Prüfeinheit 112, 122, 132, 142 zur Durchführung der eigenständigen Prüfung der Kompatibilität vorgesehen.

Das Grundmodul 100 umfaßt einen Arbeitsspeicher 101 und einen Prozessor 102. In den Arbeitsspeicher 101 ist ein durch den Prozessor 102 verarbeitbares Steuerungsprogramm ladbar, das zumindest einen Codeabschnitt umfaßt. Bei Ausführung dieses Codeabschnitts werden vorangehend beschriebene Verfahrensschritte veranlaßt, wenn das Steuerungsprogramm im Grundmodul 100 abläuft. Außerdem ist im Grundmodul 100 eine Sende- und Empfangseinheit 103 zur Übermittlung von Sammelmeldungen und zum Empfang von Registrierungsmeldungen und Statusmeldungen vorgesehen.

Bei der Prüfung der Kompatibilität der Firmwareversion eines prüfenden Moduls mit der Firmwareversion anderer Module wird ermittelt, ob der Versionsstand eines jeweils anderen Moduls mindestens einem durch das prüfende Modul für das jeweils andere Modul geforderten Versionsstand entspricht. Aus Effizienzgründen wird die Prüfung der Kompatibilität der Firmwareversion eines prüfenden Moduls mit der Firmwareversion anderer Module vorzugsweise nur für voneinander abhängige Module durchgeführt. Außerdem sollte bei einer erkannten Inkompatibilität durch ein prüfendes Modul vorteilhafterweise ein Übergang des prüfenden Moduls bzw. eines mit dem prüfenden Modul inkompatiblen Moduls in einen definierten Betriebszustand veranlaßt werden.

Entsprechend Schritt 208 des in Figur 2 dargestellten Ablaufdiagramms stellt das Grundmodul 100 bei einer erkannten Inkompatibilität an der mit dem Grundmodul 100 verbundenen Benutzerschnittstelle 160 eine Auswahl an Konfliktbereinigungsoptionen bereit. Auf eine Benutzerauswahl einer Konfliktbereinigungsoption (Schritt 209) wird ein Laden zueinander kompatibler Firmware durch von der erkannten Inkompatibilität betroffene Module entsprechend einer ausgewählten Konfliktbereinigungsoption veranlaßt (Schritt 210).

Bei einer bestehenden Inkompatibilität veranlaßt das Grundmodul im vorliegenden Ausführungsbeispiel eine Verhinderung eines Systemstarts der Steuerungs-, Meß- und Überwachungseinrichtung. Zudem wird im Grundmodul 100 zusätzlich zum Modulidentifikator und zur Angabe der Firmwareversion für mit dem Grundmodul verbundene Module jeweils eine Anschlußadresse eines Moduls am Grundmodul gespeichert. Auf diese Weise kann ein Positionswechsel von Modulen innerhalb des Grundmoduls 100 erkannt werden. Dies kann beispielsweise bei Geräten, die in einen Analyseprozeß integriert sind, von Interesse sein, insbesondere wenn dies Auswirkungen auf einen mechanischen Aufbau einer Anlage hat.

Grundsätzlich sollte sichergestellt werden, daß Parameter von Nachfolgefirmware kompatibel zu Parametern von Vorgängerversionen sind. Falls bei einer Firmwareänderung neue Parameter eingeführt werden, sollten diese in einer Parameterstruktur hinten angehängt werden. Nicht mehr benötigte Parameter einer Vorgängerversion, durch Ergänzung eines Prä- oder Postfixes umbenannt. Auf diese Weise ist für Entwickler erkennbar, daß derartige Parameter grundsätzlich nicht mehr verwendet werden sollen, da sie beispielsweise in zukünftigen Versionen nicht mehr unterstützt werden. Falls ein bisheriger Parameter bei einem Versionswechsel ein neues Format erhalten soll, wird vorzugsweise ein neuer Parameter angelegt und der bisherige Parameter wie oben beschrieben umbenannt.

Die Parameter eines Moduls sind im vorliegenden Ausführungsbeispiel blockweise in einer Struktur organisiert, die zur Identifikation folgende Informationen umfassen:
- Modultyp,
- Parameterblocklänge,
- Parameterblockversionskennung.

Beim Hochlauf prüfen die Module anhand von Modultyp und Parameterblockversionskennung, ob Parameterblöcke kompatibel zur vorhandenen Firmware sind. Ist ein Parameterblock neuer als für die vorhandene Firmware spezifiziert, sollte eine Fehlermeldung an der Benutzerschnittstelle 160 signalisiert werden.

Ist die Parameterblockversionskennung kleiner als für die vorhandene Firmware spezifiziert, sollte eine Warnmeldung an der Benutzerschnittstelle 160 signalisiert werden, da neu hinzugefügte Parameter in diesem Fall mit Standardwerten belegt werden, die anwenderseitig neu eingestellt werden können.

Die Anwendung der vorliegenden Erfindung ist nicht auf das beschriebene Ausführungsbeispiel beschränkt.

## Patentansprüche

1. Verfahren zum Betrieb einer Steuerungs-, Meß- und/oder Überwachungseinrichtung mit mehreren in einem Grundmodul angeordneten Modulen für Steuerungs-, Meß- und/oder Überwachungsfunktionen, bei dem
- in einer dem Grundmodul zugeordneten Speichereinheit für mit dem Grundmodul verbundene erste Module zumindest jeweils ein Modulidentifikator und eine Angabe über eine Firmwareversion eines ersten Moduls gespeichert sind,
- ein zweites Modul bei Verbindung mit dem Grundmodul eine erste Meldung an das Grundmodul übermittelt, die einen Modulidentifikator und eine Angabe über eine Firmwareversion des zweiten Moduls umfaßt,
- der Modulidentifikator und die Angabe der Firmwareversion des zweiten Moduls in der Speichereinheit gespeichert werden,
- das Grundmodul eine zweite Meldung an mit dem Grundmodul verbundene Module übermittelt, die in der Speichereinheit gespeicherte Modulidentifikatoren und zugeordnete Angaben über Firmwareversionen umfaßt,
- mit dem Grundmodul verbundene Module anhand der zweiten Meldung jeweils eigenständig eine Prüfung einer Kompatibilität ihrer eigenen Firmwareversion mit der Firmwareversion anderer mit dem Grundmodul verbundener Module durchführen,
- ein Modul bei einer erkannten Inkompatibilität eine Statusmeldung an das Grundmodul übermittelt, die zumindest den Modulidentifikator eines aufgrund der Firmwareversion inkompatiblen Moduls und eine Angabe eines für das inkompatible Modul erforderlichen Versionsstandes zur Inkompatibilitätsbeseitigung umfaßt.

2. Verfahren nach Anspruch 1,
bei dem bei der Prüfung der Kompatibilität der Firmwareversion eines prüfenden Moduls mit der Firmwareversion anderer Module ermittelt wird, ob der Versionsstand eines jeweils anderen Moduls mindestens einem durch das prüfende Modul für das jeweils andere Modul geforderten Versionsstand entspricht.

3. Verfahren nach einem der Ansprüche 1 oder 2,
bei dem die Prüfung der Kompatibilität der Firmwareversion eines prüfenden Moduls mit der Firmwareversion anderer Module nur für voneinander abhängige Module durchgeführt wird.

4. Verfahren nach einem der Ansprüche 1 bis 3,
bei dem bei einer erkannten Inkompatibilität durch ein prüfendes Modul ein Übergang des prüfenden Moduls und/oder eines mit dem prüfenden Modul inkompatiblen Moduls in einen definierten Betriebszustand veranlaßt wird.

5. Verfahren nach einem der Ansprüche 1 bis 4,
bei dem das Grundmodul bei einer erkannten Inkompatibilität an einer Benutzerschnittstelle eine Auswahl an Konfliktbereinigungsoptionen bereitstellt und auf eine Benutzerauswahl ein Laden zueinander kompatibler Firmware durch von der erkannten Inkompatibilität betroffene Module entsprechend einer ausgewählten Konfliktbereinigungsoption veranlaßt.

6. Verfahren nach einem der Ansprüche 1 bis 5,
bei dem das Grundmodul bei einer bestehenden Inkompatibilität eine Verhinderung eines Systemstarts der Steuerungs-, Meß- und/oder Überwachungseinrichtung veranlaßt.

7. Verfahren nach einem der Ansprüche 1 bis 6,
bei dem in der Speichereinheit zusätzlich zum Modulidentifikator und zur Angabe der Firmwareversion für mit dem Grundmodul verbundene Module jeweils eine Anschlußadresse eines Moduls am Grundmodul gespeichert wird.

8. Verfahren nach einem der Ansprüche 1 bis 7,
bei dem Konfigurationsparameter von mit dem Grundmodul verbundenen Modulen in der Speichereinheit gespeichert und laufend aktualisiert werden.

9. Verfahren nach Anspruch 8,
bei dem bei einem Austausch eines mit dem Grundmodul verbundenen Moduls durch ein Ersatzmodul eine automatische Übertragung von Konfigurationsparametern des Moduls auf das Ersatzmodul erfolgt.

10. Verfahren nach Anspruch 9,
bei dem die Übertragung der Konfigurationsparameter auf das Ersatzmodul erst nach Benutzerfreigabe erfolgt.

11. Modulare Steuerungs-, Meß- und/oder Überwachungseinrichtung mit
- einem Grundmodul,
- mehreren im Grundmodul angeordneten Modulen für Steuerungs-, Meß- und/oder Überwachungsfunktionen,
- einer dem Grundmodul zugeordneten Speichereinheit zur Speicherung jeweils eines Modulidentifikators und einer Angabe über eine Firmwareversion für mit dem Grundmodul verbundene erste Module,
- einer einem zweiten Modul zugeordneten Sendeeinheit zur Übermittlung einer ersten Meldung an das Grundmodul bei Verbindung des zweiten Moduls mit dem Grundmodul, wobei die erste Meldung einen Modulidentifikator und eine Angabe über eine Firmwareversion des zweiten Moduls umfaßt, die in der Speichereinheit speicherbar sind,
- einer dem Grundmodul zugeordneten Sendeeinheit zur Übermittlung einer zweiten Meldung an mit dem Grundmodul verbundene Module, wobei die zweite Meldung in der Speichereinheit gespeicherte Modulidentifikatoren und zugeordnete Angaben über Firmwareversionen umfaßt,
- mehreren jeweils einem mit dem Grundmodul verbundenen Modul zugeordneten Prüfeinheiten zur Durchführung einer jeweils eigenständigen Prüfung einer Kompatibilität einer eigenen Firmwareversion mit der Firmwareversion anderer mit dem Grundmodul verbundener Module anhand der zweiten Meldung,
- mehreren jeweils einem mit dem Grundmodul verbundenen Modul zugeordneten Sendeeinheiten zur Übermittlung einer Statusmeldung an das Grundmodul bei einer erkannten Inkompatibilität, wobei die Statusmeldung zumindest den Modulidentifikator eines aufgrund der Firmwareversion inkompatiblen Moduls und eine Angabe eines für das inkompatible Modul erforderlichen Versionsstandes zur Inkompatibilitätsbeseitigung umfaßt.

12. Steuerungs-, Meß- und/oder Überwachungsmodul, das in einem Grundmodul einer modularen Steuerungs-, Meß- und/oder Überwachungseinrichtung anordenbar ist und
- eine Sendeeinheit zur Übermittlung einer ersten Meldung an das Grundmodul bei Verbindung des Moduls mit dem Grundmodul und zur Übermittlung einer Statusmeldung an das Grundmodul bei einer erkannten Inkompatibilität,
- eine Prüfeinheit zur Durchführung einer eigenständigen Prüfung einer Kompatibilität einer eigenen Firmwareversion mit der Firmwareversion anderer mit dem Grundmodul verbundener Module anhand einer durch das Grundmodul übermittelten zweiten Meldung,
umfaßt, wobei
- die erste Meldung einen Modulidentifikator und eine Angabe über eine Firmwareversion des zweiten Moduls umfaßt, die in einer Speichereinheit des Grundmoduls speicherbar sind,
- die zweite Meldung in der Speichereinheit gespeicherte Modulidentifikatoren und zugeordnete Angaben über Firmwareversionen umfaßt,
- die Statusmeldung zumindest den Modulidentifikator eines aufgrund der Firmwareversion inkompatiblen Moduls und eine Angabe eines für das inkompatible Modul erforderlichen Versionsstandes zur Inkompatibilitätsbeseitigung umfaßt.

13. Steuerungsprogramm, das in einen Arbeitsspeicher eines Grundmoduls einer Steuerungs-, Meß- und/oder Überwachungseinrichtung ladbar ist und zumindest einen Codeabschnitt aufweist, bei dessen Ausführung
- für mit dem Grundmodul verbundene erste Module eine Speicherung zumindest jeweils eines Modulidentifikators und einer Angabe über eine Firmwareversion eines ersten Moduls in einer dem Grundmodul zugeordneten Speichereinheit veranlaßt wird,
- eine Übermittlung einer ersten Meldung, die einen Modulidentifikator und eine Angabe über eine Firmwareversion des zweiten Moduls umfaßt, an das Grundmodul durch ein zweites Modul bei Verbindung mit dem Grundmodul veranlaßt wird,
- eine Speicherung des Modulidentifikators und der Angabe der Firmwareversion des zweiten Moduls in der Speichereinheit veranlaßt wird,
- das Grundmodul eine zweite Meldung an mit dem Grundmodul verbundene Module übermittelt, die in der Speichereinheit gespeicherte Modulidentifikatoren und zugeordnete Angaben über Firmwareversionen umfaßt,
- jeweils eine eigenständige Prüfung einer Kompatibilität einer eigenen Firmwareversion mit der Firmwareversion anderer mit dem Grundmodul verbundener Module anhand der zweiten Meldung durch mit dem Grundmodul verbundene Module veranlaßt wird,
- eine Übermittlung einer Statusmeldung, die zumindest den Modulidentifikator eines aufgrund der Firmwareversion inkompatiblen Moduls und eine Angabe eines für das inkompatible Modul erforderlichen Versionsstandes zur Inkompatibilitätsbeseitigung umfaßt, an das Grundmodul bei einer erkannten Inkompatibilität durch ein prüfendes Modul veranlaßt wird,
wenn das Steuerungsprogramm in der Steuerungs-, Meß- und/oder Überwachungseinrichtung abläuft.
